Europäisches Patentamt

European Patent Office

Office européen des brevets

(11) Publication number: **0 143 093**
**B1**

# (12) EUROPEAN PATENT SPECIFICATION

(45) Date of publication of patent specification: **02.09.87**

(21) Application number: **84850312.4**

(22) Date of filing: **22.10.84**

(51) Int. Cl.⁴: **B 65 G 25/00**

(54) Conveyor for stepwise horizontal transport of heavy cylindrical objects.

(30) Priority: **21.11.83 SE 8306409**

(43) Date of publication of application:
**29.05.85 Bulletin 85/22**

(45) Publication of the grant of the patent:
**02.09.87 Bulletin 87/36**

(84) Designated Contracting States:
**DE FR GB SE**

(56) References cited:
**DE-A-2 818 010**
**GB-A-1 416 239**
**GB-A-1 568 332**
**SE-B- 337 197**
**US-A-3 322 259**
**US-A-3 757 931**
**US-A-4 219 113**

(73) Proprietor: **AB Nordströms Linbanor**
**Box 914**
**S-199 25 Enköping (SE)**

(72) Inventor: **Svensson, Sune**
**Tistelgatan 8**
**S-199 63 Enköping (SE)**

(74) Representative: **Johansson, Lars E.**
**LKB-Produkter AB Box 305**
**S-161 26 Bromma (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### TECHNICAL FIELD

The present invention relates to a conveyor for stepwise horizontal transport of heavy cylindrical objects of different diameters between successive stations where the objects rest with their center axes along the direction of transport, the conveyor comprising at least one transport device which is adapted to, repeatedly, via support means, synchronously lift the objects at the respective stations and transport them to the next station, seen in the direction of transport, and, then, return to its initial position.

### BACKGROUND ART

Conveyors of the above kind, usually called walking beam conveyors, are used by the steel industry to convey mainly heavy objects such as steel coils (compare GB—A—1416239, particularly Fig. 5).

The height of lift of today's walking beam conveyors is dimensioned starting from the fact that horizontal cylindrical objects of different diameters are to be lifted. The total height of lift at today's walking beam conveyors is between 200 and 250 mm and the objects always have to be lifted between about 150 to 200 mm. This, of course, requires a lot of energy.

### DISCLOSURE OF INVENTION

The object of the present invention is to bring about a walking beam conveyor which, in comparison with previously known walking beam conveyors, does not consume so much energy for the lifting as such even if the outer dimensions of the objects vary.

This is attained by the conveyor defined in claim 1.

### BRIEF DESCRIPTION OF DRAWINGS

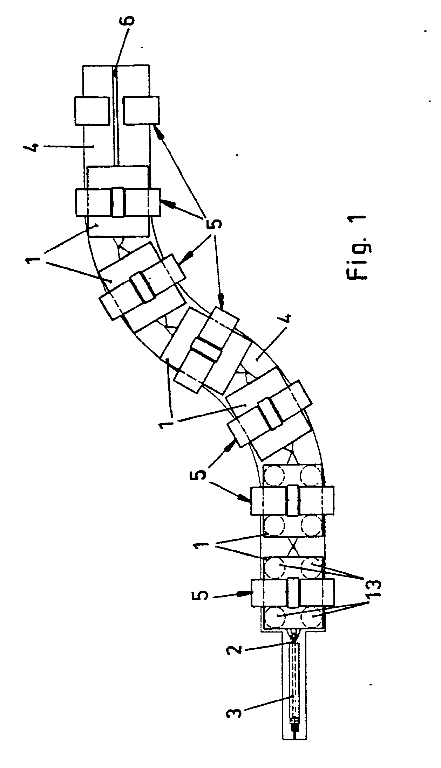

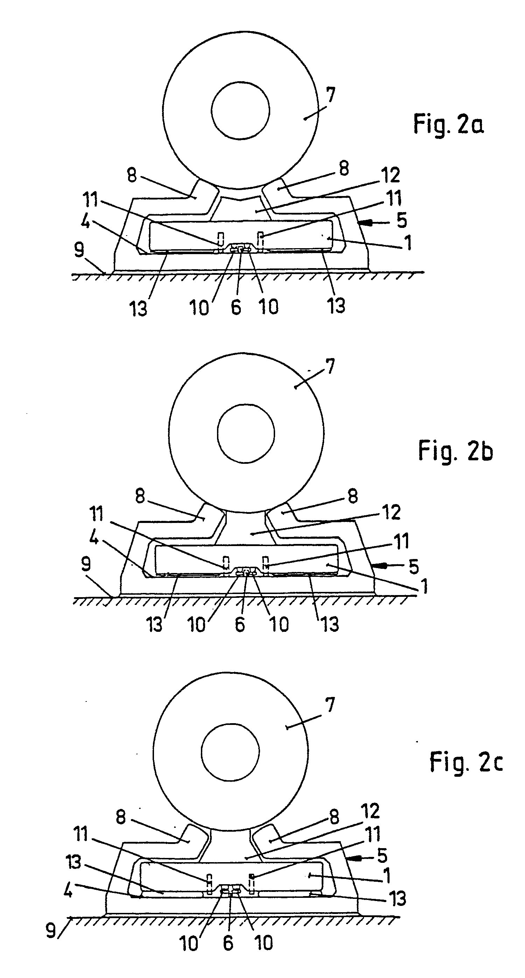

The invention will be described more in detail below with reference to the attached drawings on which Fig. 1 is a plan view of an embodiment of a conveyor according to the invention, and Figs. 2a, 2b and 2c are end views of a station at the conveyor according to Fig. 1 with a transport device in its rest, contact, and transport position, respectively.

### DETAILED DESCRIPTION

Fig. 1 is a plan view of an embodiment of a conveyor according to the invention. The shown conveyor comprises six trolleys 1, which are interconnected and adapted, by means of a piston rod 2 in a cylinder 3, e.g. a hydraulic cylinder, to move synchronously forward and back on a bedding 4 between seven successive stations 5 for stepwise transport of objects, e.g. steel coils within the steel industry, provided on the six stations 5 located next to the cylinder 3.

In the embodiment shown in Fig. 1 the bedding 4 extends curvi-linear and the trolleys 1 are pivotally interconnected. Should merely a rectilinear transport be required, the trolleys 1 do not have to be pivotally interconnected.

For guiding the trolleys on the bedding 4 a guide rail 6 may be provided on the bedding 4 as shown more in detail in Figs. 2a, 2b and 2c.

Figs. 2a, 2b and 2c show an end view of a coil 7 at a station 5 with a trolley 1 on the bedding 4 provided with the guide rail 6. The station 5 comprises lateral support members 8 for supporting the coil 7.

At the embodiment shown the stations 5 are provided directly on a floor 9 whereby no greater reconstruction works are required for installing the conveyor according to the invention.

The bedding 4 for the trolleys 1 has to be very plane for reasons that will be apparent below, and is made up of concrete cast between the stations 5 with strips of stainless steel provided on the concrete.

On its underside the trolley 1 is provided with means 10 known per se for cooperation with the guide rail 6 on the bedding 4. Moreover, the trolley 1 is provided with at least three wheels 11 by means of which the trolley 1 can roll on the bedding 4. The trolley 1 is provided with a saddle 12, which in Fig. 2a is shown in its rest position. The saddle 12 can be operated by means of a hydraulic cylinder, not shown, into contact with the coil 7 in the manner shown in Fig. 2b, and, thereafter, locked in that position.

In order to lift the coil 7 from the lateral support members 8 of the station 5 and at the same time free the trolley 1 from the bedding 4, the trolley 1 at the embodiment shown is provided with at least four air-cushion means 13, which can be actuated in a manner known per se to lift the trolley 1 from the plane bedding 4 and at the same time, via the saddle 12, lift the coil 7 from the lateral support members 8 of the station 5 in the manner shown in Fig. 2c. Of course, the means 13 do not necessarily have to be actuated by means of compressed air but can be actuated by means of any pressure medium.

When all trolleys 1 are in the position shown in Fig. 2c they are displaced by means of the piston rod 2 shown in Fig. 1, the length of stroke of the piston rod 2 in the embodiment shown corresponding to the distance between two successive stations 5.

Thus, a transport cycle is carried out in the following manner:

In the initial position the trolleys 1 are in the positions shown in Fig. 1, the saddles 12 on the respective trolleys 1 being in their rest position shown in Fig. 2a.

A transport cycle is initiated in that the saddles 12 on the trolleys 1 at stations 5 on whose lateral support members 8 coils 7 are resting, are brought to the contact position shown in Fig. 2b and are locked in this position in a manner known per se. The saddles 12 on the trolleys 1 at stations where coils are missing, will not be actuated but will remain in their rest positions according to Fig. 2a. Then, the air-cushion means 13 on all trolleys 1 with saddles in the contact position, are actuated in order to free these trolleys from the bedding 4 and at the same time via the saddles 12 locked in the contact positions free the coils 7 from the lateral support members 8 at the respective stations 5. The air-cushion means 13 are not actuated on the trolleys where the saddles are not in the contact position, but these trolleys will remain in their rest positions according to Fig. 2a. After that the trolleys 1 carrying coils have been brought to the position shown in Fig. 2c while the trolleys without coils rest on their wheels shown in Fig. 2a, all trolleys 1 are displaced by means of the piston rod 2 to the next station seen in the direction of transport from the position shown in Fig. 1. Then, the air-cushion means 13 on the trolleys 1 that via their saddles 12 are carrying coils 7 are deactuated, whereupon all trolleys again will come to rest on their wheels 11 at the same time as the coils 7 will come to rest on the lateral support members 8 at the next stations seen in the direction of transport in the manner shown in Fig. 2b. The saddles 12 that have carried coils 7 are, then, lowered to the position shown in Fig. 2a, whereupon the trolleys 1 are retracted to their initial positions on the wheels 11 by means of the piston rod 2, and a corresponding transport cycle is repeated.

Thus, the conveyor according to the invention does not require any expensive installation below the floor level but is comparatively inexpensive and simple to install in comparison with most of the previously known walking beam conveyors. Moreover, the conveyor according to the invention facilitates a curvi-linear transport of coils between successive stations. In that the saddles 12 are brought into locked contact with coils 7 before lifting of trolleys with coils takes place, very little energy is consumed in comparison with known walking beam conveyors.

## Claims

1. Conveyor for stepwise horizontal transport of heavy cylindrical objects (7) of different diameters between successive stations (5) where the objects rest with their center axes along the direction of transport, the conveyor comprising at least one transport device (1) which is adapted to, repeatedly, via support means (12), synchronously lift the objects (7) at the respective stations (5) and transport them to the next station, seen in the direction of transport, and, then, return to its initial position, characterised by means for raising the support means (12) with regard to the transport device (1) so that the support means (12) can individually be brought into contact with the objects (7) and by means for locking the support means (12) with regard to the transport device (1) in said contact position, said support means being raised and locked before said objects are lifted by the transport device (1).

2. Conveyor according to claim 1, characterized in that the transport device (1) is lifted relative to a bedding (4) by means of pressure fluid means (13).

3. Conveyor according to claim 2, characterized in that there are more than one transport device (1) and that the transport devices are pivotally interconnected.

4. Conveyor according to claim 3, characterized in that the transport devices (1) are guided between the stations (5) by means of a guide rail (6) provided on the bedding (4).

## Patentansprüche

1. Fördervorrichtung zum schrittweisen horizontalen Transport von schweren zylindrischen unterschiedliche Durchmesser aufweisenden Gegenständen (7) zwischen aufeinanderfolgenden Stationen (5), an denen die Gegenstände mit ihren Mittelachsen entlang der Transportrichtung ruhen, mit wenigstens einer Transporteinrichtung (1), welche geeignet ist, wiederholt mit Hilfe von Trägermitteln (12) die Gegenstände (7) synchron an den jeweiligen Stationen (5) hochzuheben und zur — in Transportrichtung gesehen — nächsten Stations zu transportieren und dann wieder in ihre Ausgangsposition zurückzukehren, gekennzeichnet durch Mittel zum Anheben der Trägermittel (12) gegenüber der Transporteinrichtung (1), so daß die Trägermittel (12) mit den Gegenständen (7) einzeln in Berührung gebracht werden können und durch Mittel zum Verriegeln der Trägermittel (12) gegenüber der Transporteinrichtung (1) in der Berührungsstellung, wobei die Trägermittel vor dem Hochheben der Gegenstände durch die Transporteinrichtung (1) angehoben und verriegelt sind.

2. Fördervorrichtung nach Anspruch 1, dadurch gekennzeichnet, daß die Transporteinrichtung (1) gegenüber einer Bettung (4) mit Hilfe eines Druckflüssigkeitsmittels (13) hochgehoben ist.

3. Fördervorrichtung nach Anspruch 2, dadurch gekennzeichnet, daß mehr als eine Transporteinrichtung (1) vorgesehen sind und daß die Transporteinrichtungen schwenkbar miteinander verbunden sind.

4. Fördervorrichtung nach Anspruch 3, dadurch gekennzeichnet, daß die Transporteinrichtungen (1) zwischen den Stationen (5) mit Hilfe einer Führungsschiene (6), welche an der Bettung (4) vorgesehen ist, geführt sind.

## Revendications

1. Transporteur pour le transport horizontal pas à pas d'objets cylindriques lourds (7) de différents diamètres entre des postes successifs (5) où les objets reposent de façon que leurs axes centraux soient orientés dans la direction du transport, le transporteur comprenant au moins un dispositif de transport (1) qui est conçu pour soulever de façon synchronisée et répétée, par l'intermédiaire de moyens (12) de support, les objets (7) dans les postes respectifs (5) et pour les transporter vers le poste suivant, vu dans la direction du transport, et pour revenir dans sa position initiale, caractérisé par des moyens destinés à élever les moyens de support (12) par rapport au dispositif (1) de transport afin que les moyens de support (12) puissent être amenés individuellement en contact avec les objets (7), et par des moyens destinés à bloquer les moyens (12) de support par rapport au dispositif (1) de transport dans ladite position de contact, lesdits moyens de support étant élevés et bloqués avant que lesdits objets soient soulevés par le dispositif (1) de transport.

2. Transporteur selon la revendication 1, caractérisé en ce que le dispositif (1) de transport est soulevé par rapport à une assise (4) à l'aide de moyens (13) à fluide sous pression.

3. Transporteur selon la revendication 2, caractérisé en ce qu'il comporte plus d'un dispositif (1) de transport et en ce que les dispositifs de transport sont articulés entre eux.

4. Transporteur selon la revendication 3, caractérisé en ce que les dispositifs (1) de transport sont guidés entre les postes (5) au moyen d'un rail (6) de guidage prévu sur l'assise (4).

Fig. 1

Fig. 2a

Fig. 2b

Fig. 2c